# EUROPÄISCHE PATENTANMELDUNG

(11) **EP 0 639 665 A1**
(43) Veröffentlichungstag der Anmeldung: **22.02.1995**
(21) Anmeldenummer: 94810465.8
(22) Anmeldetag: 11.08.1994
(51) Int. Cl.: D06L 3/10, C01B 17/66, D21C 9/10

(54) **Phosphatfreies Reduktionsbleichmittel**

(30) Priorität: 20.08.1993 CH 2492/93
(71) Anmelder: CIBA-GEIGY AG, CH-4002 Basel (CH)
(72) Erfinder: Traber, Rainer Hans, Dr., CH-4153 Reinach (CH)

(57) **Zusammenfassung**

Beschrieben wird eine phosphatfreie, reduktive Bleichmittelzusammensetzung, enthaltend
(a) ein reduktives Bleichmittel und
(b) einen Bleichstabilisator ausgewählt aus
   (b₁) einem Zitronensäurederivat,
   (b₂) einem Homo- oder Copolymerisat von ethylenisch ungesättigten Mono- oder Dicarbonsäuren,
   (b₃) einem wasserlöslichen Magnesiumsalz und
   (b₄) einem Alkalimetallsalz der Tetraborsäure.

Die Bleichmittelzusammensetzung eignet sich zum reduktiven Bleichen von Pflanzen-, Tier- oder Synthesefasern sowie von Papier. Es werden hohe Weissgrade erzielt. Gleichzeitig ist die Zusammensetzung weitgehend umweltgerecht.

## Beschreibung

Die vorliegende Erfindung betrifft phosphatfreie Bleichmittelzusammensetzungen für die reduktive Bleiche, ein Applikationsverfahren zum reduktiven Bleichen von natürlichen oder synthetischen Fasermaterialien und von Papier sowie die mit diesem Verfahren behandelten Textilfasermaterialien.

Verschiedene Fasermaterialien pflanzlichen oder tierischen Ursprungs oder synthetische Fasermaterialien, wie z.B. Baumwolle, synthetische Polyamidfasern oder Wolle, lassen sich reduktiv bleichen. Als Bleichagens wird dabei in der Regel Natriumdithionit (Natriumhydrosulfit) eingesetzt. Da in wässrigen Lösungen das Natriumdithionit rasch oxidiert und dadurch der Bleicheffekt erheblich reduziert wird, werden der Bleichchemikalie gewöhnlich Stabilisatoren zugesetzt, die puffernde und komplexierende Eigenschaften haben. Gute Wirkungen als Bleichstabilisatoren zeigen phosphorhaltige Verbindungen, die allerdings den Nachteil haben, dass sie z.B. zur Eutrophierung von Gewässern führen können.

Der vorliegenden Erfindung liegt daher die Aufgabe zugrunde, Bleichstabilisatoren zu finden, die einerseits gute puffernde und komplexierende Eigenschaften in reduktiven Bleichsystemen aufweisen und andererseits umweltgerecht sind, d.h. die ökologischen Auflagen erfüllen.

Überraschenderweise wurden nun Bleichstabilisatoren gefunden, die phosphatfrei sind und ausserdem in reduktiven Bleichsystemen gute Wirkungen zeigen und im Gegensatz zu phosphorhaltigen Verbindungen, keine Eutrophierung von Gewässern verursachen.

Gegenstand der vorliegenden Erfindung ist daher eine phosphatfreie, reduktive Bleichmittelzusammensetzung, enthaltend
(a) ein reduktives Bleichmittel und
(b) einen Bleichstabilisator ausgewählt aus
   (b₁) einem Zitronensäurederivat,
   (b₂) einem Homo- oder Copolymerisat von ethylenisch ungesättigten Mono- oder Dicarbonsäuren,
   (b₃) einem wasserlösliches Magnesiumsalz und
   (b₄) einem Alkalisalz der Tetraborsäure.

Als Komponente (a) werden die in der Reduktionsbleiche übliche Bleichmittel eingesetzt, wie z.B. Schwefeldioxid, schwefelige Säure oder angesäuerte Natriumbisulfitlösung. Wesentliche textiltechnische Bedeutung kommt allerdings den Salzen der dithionigen Säure, insbesondere dem als Komponente (a) erfindungsgemäss eingesetztem Natriumdithionit zu.

Als Zitronensäurederivat (b₁) kommen in erster Linie die wasserlöslichen Alkalisalze der Zitronensäure in Betracht, z.B. die Lithium-, Kalium- oder Natriumsalze. Bevorzugt werden die Natriumsalze verwendet. Ganz besonders bevorzugt ist dabei das Trinatriumcitrat-Dihydrat.

Als monomere Ausgangsverbindung zur Herstellung der Homo- oder Copolymerisate von ethylenisch ungesättigten Mono-, Di- oder Tricarbonsäuren der Komponente (b₂) sind ethylenisch ungesättigte monomere Carbonsäuren oder deren Anhydride geeignet, die einen ethylenisch ungesättigten aliphatischen Rest aufweisen, wie z.B. (Meth)Acrylsäure, Maleinsäure, Fumarsäure, Itaconsäure, Mesaconsäure, Citraconsäure, Vinylessigsäure, Vinylpropionsäure, Crotonsäure, Aconitsäure, Allylessigsäure, Vinyloxyessigsäure, Allyloxyessigsäure, α,β-Dimethyl(meth)acrylsäure, Methylenmalonsäure, 2-Hydroxy(meth)acrylsäure, α-Halogenacrylsäure, α-Carboxyethylacrylat, Acrylamidoglycolsäure, β-Carboxyethylacrylat, Allyloxy-3-hydroxy-butansäure, Allyloxymalonsäure, Allylbernsteinsäure oder Allylmalonsäure. Bevorzugt sind Monocarbonsäuren mit 3 bis 5 Kohlenstoffatomen, z.B. die Acrylsäure, Methacrylsäure, 2-Halogeno(meth)acrylsäure, 2-Hydroxyethylacrylsäure, α-Cyanoacrylsäure, Crotonsäure und Vinylessigsäure. Ethylenisch ungesättigte Dicarbonsäuren sind vorzugsweise die Fumarsäure, Maleinsäure oder Itaconsäure, ferner die Mesaconsäure, Citraconsäure, Glutaconsäure und Methylmalonsäure. Als Anhydrid dieser Säuren sei insbesondere Maleinsäureanhydrid genannt.

Als polymerisierte Carbonsäuren stehen dabei die Polymethacrylsäure, die Polyacrylsäure und vor allem das Copolymerisat aus Acrylsäure und Maleinsäure im Vordergrund des Interesses. Die erfindungsgemäss einzusetzenden Homo- oder Copolymerisate weisen dabei ein Molekulargewicht von 2'000 bis 2'000'000, vorzugsweise von 2'000 bis 800'000 auf.

Die Herstellung der Homo- oder Copolymerisate der Komponente (b₂) der erfindungsgemässen Bleichmittelzusammensetzung erfolgt nach an sich bekannten Methoden, zweckmäßig in der Weise, dass man die entsprechende monomeren Verbindungen in Gegenwart eines Katalysators, z.B. bei einer Temperatur von 60 bis 100°C polymerisiert.

Als Katalysator für die Herstellung der Komponenten (b₂) wird vorzugsweise ein freie Radikale bildender organischer Initiator verwendet. Geeignete Initiatoren zur Durchführung der radikalischen Polymerisation sind z.B. symmetrische aliphatische Azoverbindungen wie Azo-bis-isobuttersäurenitril, Azo-bis-2-methyl-valeronitril, 1,1'-Azo-bis-1-cyclo-hexanitril und 2,2'-Azo-bis-isobuttersäurealkylester; symmetrische Diacylperoxide, wie z.B. Acetyl-, Propionyl- oder Butyrylperoxid, Benzoylperoxid, brom-, nitro-, methyl- oder methoxy-substituierte Benzoylperoxide sowie Lauroylperoxid; symmetrische Peroxydicarbonate, wie z.B. Diethyl-, Diisopropyl-, Dicyclohexyl-, sowie Dibenzylperoxidicarbonat; tert.-Butylperoctoat, tert.-Butylperbenzoat oder tert.-Butylphenylperacetat sowie Peroxidicarbamate wie tert.-Butyl-N-(phenylperoxi)-carbamat oder tert.-Butyl-N-(2,3-dichlor- oder -4-chlorphenyl-peroxi)-carbamat. Weitere geeignete Peroxide sind: tert.-Butylhydroperoxid, Di-tert.-butylperoxid, Cumolhydroperoxid, Di-cumolperoxid und tert.-Butylperpivalat. Eine weitere geeignete Verbindung ist Kaliumpersulfat, das bei der vorliegenden Erfindung bevorzugt eingesetzt wird.

Der Katalysator wird in der Regel in Mengen von 0,1 bis 10 Gew.-%, vorzugsweise 0,5 bis 2 Gew.-%, bezogen auf die Ausgangsprodukte, eingesetzt.

Die Polymerisation wird vorteilhafterweise in inerter Atmosphäre, z.B. in Gegenwart von Stickstoff durchgeführt.

Die in der erfindungsgemässen Bleichmittelzusammensetzung eingesetzten Homo- oder Copolymerisate können auch im Gemisch mit wasserlöslichen Alkalisalzen, wie z.B. Natriumcarbonat bevorzugt eingesetzt werden. Bevorzugt ist dabei ein Gemisch aus Polyacrylsäure mit einem Molekulargewicht von ca. 4500 und Natriumcarbonat.

Bei der Komponente (b₃) handelt es sich vor allem um Magnesiumsalze der Gluconsäure, insbesondere um Magnesiummono- oder Magnesiumdigluconat. Das Magnesiumgluconat kann dabei in der erfindungsgemässen Bleichmittelzusammensetzung als solches und vorzugsweise als Feststoff eingesetzt werden. In einer weiteren Ausführungsform kann das Gluconat aber auch in situ gebildet werden aus Gluconsäure und Magnesiumhydroxid oder Magnesiumoxid, vorzugsweise Magnesiumhydroxid. Ferner kann Gluconsäure oder dessen Natriumsalz in Kombination mit einem wasserlöslichen Magnesiumsalz eingesetzt werden. Als wasserlösliches Magnesiumsalz kommt dabei das Acetat, vor allem das Sulfat oder dessen Heptahydrat und insbesondere das Chlorid oder dessen Hexahydrat in Betracht. Das Magnesiumsalz wird in der Regel als Feststoff eingesetzt, wobei festes Magnesiumchlorid-Hexahydrat im Vordergrund steht.

Als bevorzugte Komponente (b₄) kommt das Kalium- und insbesondere das Natriumtetraborat in Betracht.

Im Vordergrund des Interesses steht eine reduktive Bleichmittelzusammensetzung, die
(a) Natriumdithionit und
(b) ein Zitronensäurederivat

enthält.

Eine weitere bevorzugte Bleichmittelzusammensetzung enthält
(a) Natriumdithionit und
(b) ein Copolymerisat aus Acrylsäure und Maleinsäure.

Die erfindungsgemässe Bleichmittelzusammensetzung kann neben den obligatorischen Komponenten (a) und (b) als fakultative Komponenten (c) auch ein Netzmittel und/oder als Komponente (d) optische Aufheller enthalten.

Als Netzmittel kommen anionische oder nichtionogene Tenside (Nio-Tenside), insbesondere aber deren Gemische, in Betracht. Bevorzugte anionische Tenside sind z.B. Alkylarylmonosulfonate, Fettsäurekondensationsprodukte, Eiweissspaltprodukte oder deren Salze und vor allem Alkylmonosulfonate und Alkylbenzolmonosulfonsäuren mit 12 bis 22 Kohlenstoffatomen im Alkylrest. Bevorzugte nichtionogene Tenside sind z.B. Addukte aus Alkylenoxiden, vor allem Propylen- und insbesondere Ethylenoxid mit z.B. 4 bis 16 Kohlenstoffatomen im Alkylrest, vor allem Fettsäureamide und insbesondere gegebenenfalls endgruppenverschlossene Fettalkohole, wobei Addukte aus Ethylenoxid und Fettalkoholen besonders bevorzugt sind und als Gemisch mit den Alkylmonosulfonaten der angegebenen Art im Vordergrund des Interesses stehen. Als weitere Komponenten in diesen Gemischen eignen sich auch Silikontenside.

Netzmittel werden in den Bleichflotten insbesondere dann eingesetzt, wenn es sich beim zu behandelnden Fasermaterial um Cellulose handelt, die in rohem Zustand vorliegt oder insbesondere aus roher Baumwolle besteht.

Weiterhin können der erfindungsgemässen Bleichmittelzusammensetzung Entschäumungs- bzw. Entlüftungsmittel zugesetzt werden. Sie können vor allem dann erforderlich sein, wenn Netzmittel in der Bleichflotte vorhanden sind. Hierbei handelt es sich z.B. um höhere Alkohole, insbesondere Isooctanol, jedoch vor allem um Entschäumungs- und/oder Entlüftungsmittel auf Siliconbasis, insbesondere um Siliconölemulsionen.

Die ebenfalls als fakultative Komponente der erfindungsgemässen Bleichmittelzusammensetzung eingesetzten optischen Aufheller zur Erzielung eines besonders hohen Weissgrades der behandelten Materialien gehören im allgemeinen der Styryl- und Stilbenreihe an, wie z.B. Distyrylarylene, Diaminostilbene, Ditriazolylstilbene, Phenylbenzoxyzolylstilbene, Stilbennaphthotriazole und Dibenzoxazolylstilbene. Bevorzugt sind optische Aufheller vom Typ der Distyrylbiphenyle oder der Bistriazinylaminostilbene, welche Sulfonsäuregruppen enthalten, z.B. sulfonierte Bisstyrylbiphenyl- und Bistriazinyl-Derivate, insbesondere die als Alkalimetallsalze, vor allem als Kalium- oder vorzugsweise als Natriumsalze vorliegenden Bis(Phenylamino-morpholino-s-triazinyl)-stilben-disulfonsäuren. Diese werden vorzugsweise als handelsübliche, wässrige, etwa 20 bis 30 gewichtsprozentige Flüssigformulierungen gegebenenfalls eingesetzt.

Die erfindungsgemässe Bleichmittelzusammensetzung enthält in der Regel vorzugsweise
30 bis 80 Gew.% der Komponente (a),
20 bis 70 Gew.% der Komponente (b),
0 bis 10 Gew.% der Komponente (c) und
0 bis 10 Gew.% der Komponente (d).

Die Herstellung der erfindungsgemässen Bleichmittelzusammensetzung erfolgt durch Vermengen der einzelnen Komponenten und gegebenenfalls gleichzeitiges Mahlen des Gemenges in einer Kugelmühle. Bei ähnlicher Korngrösse der Ausgangsmaterialien ist ein Mahlen nicht notwendig. Beim Mahlprozess handelt es sich um einen rein mechanischen Vorgang. Eine chemische Reaktion der einzelnen Komponenten untereinander findet dabei nicht statt.

Einen weiteren Erfindungsgegenstand bildet das Applikationsverfahren zum reduktiven Bleichen von natürlichen oder synthetischen Fasermaterialien. Das Verfahren ist dadurch gekennzeichnet, dass man das Fasermaterial mit einer wässrigen Flotte behandelt, welche mindestens die erfindungsgemässe Bleichmittelzusammensetzung enthält.

Das Applikationsverfahren zum reduktiven Bleichen von natürlichen oder synthetischen Fasermaterialien unter Verwendung der erfindungsgemässen Zusammensetzung wird nach an sich bekannten Methoden durchgeführt. Man unterscheidet hierbei z.B. zwischen einer Behandlung in langen Flotten, einem Kaltlager- und einem Unterflottenbleichverfahren.

In langen Flotten wird das Material einer Behandlung bei einem Flottenverhältnis von etwa 1:10, z.B. in einem Jigger, bis etwa 1:100, z.B. in einer Haspelkufe während etwa 1 bis 3 Stunden bei erhöhter Temperatur unterworfen, wobei die Behandlungstemperatur etwa 40 bis 140°C beträgt, vorzugsweise 60 bis 100°C unter Normalbedingungen, d.h. unter atmosphärischem Druck oder über 100°C, vorzugsweise 105 bis 140°C unter sogenannten HT-Bedingungen (HT = Hochtemperatur).

Das Unterflottenbleichverfahren erfolgt unter den gleichen Applikationsbedingungen, mit dem Unterschied, dass die Konzentration an zugesetztem Bleichagens höher ist.

Bei dem Kaltlagerbleichverfahren wird das zu behandelnde Material durch Eintauchen in eine Klotzflotte und anschliessendes Abquetschen imprägniert, wobei die Klotzflotte in der Regel eine Temperatur von 20 bis 95°C aufweist. Vorzugsweise erfolgt die Imprägnierung bei Raumtemperatur. Die durch die Imprägnierung aufgebrachten Chemikalien wirken sodann auf das Textilmaterial ein, wobei Einwirkungszeit, gegebenenfalls erhöhte Temperatur und Chemikalien-Konzentration in direktem Zusammenhang stehen und die gewählten Bedingungen von der Beschaffenheit des Fasermaterials und vor allem von der zur Verfügung stehenden Anlage abhängen. Anschliessend wird die imprägnierte und vorzugsweise aufgerollte Ware bei Raumtemperatur (15 bis 30°C), z.B. während 3 bis 24 Stunden gelagert, wobei die Kaltverweilzeit von der Art des applizierten Bleichbades abhängt. Anschliessend werden die Fasermaterialien in der Regel zuerst mit heissem Wasser von etwa 90 bis 98°C und dann mit warmem und zuletzt mit kaltem Wasser gründlich gespült, gegebenenfalls mit z.B. Essigsäure neutralisiert und hierauf vorzugsweise bei höheren Temperaturen bis z.B. 150°C entwässert und getrocknet.

Die wässrigen Bleichflotten haben, je nachdem, ob es sich um eine Langflotten-, Unterflotten- oder Kaltflottenbleiche handelt, die angegebenen Zusammensetzungen.

Die Langflottenbleichen enthalten in der Regel
1 bis 8, vorzugsweise 2 bis 3 g/l der wässrigen, erfindungsgemässen Zusammensetzung,
0,5 bis 3, vorzugsweise 1 bis 2 g/l eines Netz- bzw. Waschmittels,
0 bis 1, vorzugsweise 0,2 bis 0,5 g/l eines Entschäumungs- bzw. Entlüftungsmittels, und
0 bis 2, vorzugsweise 0,5 bis 1,5 Gew.-% eines optischen Aufhellers.

Die Unterflottenbleichen enthalten in der Regel
2 bis 10, vorzugsweise 3 bis 6 g/l der wässrigen, erfindungsgemässen Zusammensetzung,
1 bis 5, vorzugsweise 2 bis 4 g/l eines Netz- bzw. Waschmittels,
0 bis 2, vorzugsweise 0,5 bis 1 g/l eines Entschäumungs- bzw. Entlüftungsmittels, und
0 bis 2, vorzugsweise 1 bis 2 Gew.-% eines optischen Aufhellers.

Die Kaltlagerbleichen enthalten in der Regel
20 bis 100, vorzugsweise 40 bis 60 g/kg der wässrigen, erfindungsgemässen Zusammensetzung,
2 bis 10, vorzugsweise 3 bis 5 g/kg eines Netz- bzw. Waschmittels,
0 bis 3, vorzugsweise 0,5 bis 1,5 g/kg eines Entschäumungs- bzw. Entlüftungsmittels, und
0 bis 2, vorzugsweise 1 bis 2 Gew.-% eines optischen Aufhellers.

Die relativ geringen Mengen der erfindungsgemässen Zusammensetzung und damit auch der Komponente (b) in den einzelnen Bleichflotten zeigen, dass der erfindungsgemäss verwendete Bleichstabilisator nicht als Chelatbildner eingesetzt wird, sondern dazu, die Bleichreaktion des Natriumdithionits günstig zu beeinflussen.

Das zu behandelnde Fasermaterial kann in verschiedenen Verarbeitungsformen vorliegen, z.B. als loses Material, Garn, Gewebe oder Gewirke. Hierbei handelt es sich in der Regel stets um textile Fasermaterialien, die aus reinen textilen Fasern pflanzlichen oder tierischen Ursprungs oder aus Synthesefasern hergestellt werden, bzw. um Gemische aus pflanzlichen, tierischen und/oder synthetischen Fasermaterialien.

Als Fasern pflanzlichen Ursprungs kommen insbesondere cellulosehaltige Fasern in Betracht, z.B. solche aus regenerierter Cellulose, wie z.B. Zellwolle oder Viskose, solche aus nativer Cellulose, wie z.B. Hanf, Leinen, Jute, Ramie und vor allem Baumwolle.

Als Fasern tierischen Ursprungs ist insbesondere Wolle oder Seide zu nennen.

Als synthetische Fasern kommen z.B. solche aus Polyacrylnitril und vor allem aus Polyester und Polyamid in Betracht.

Unter Polyamidfasermaterial wird dabei synthetisches Polyamid, wie z.B. Polyamid 6, Polyamid 66 oder auch Polyamid 12, verstanden. Neben den reinen Polyamidfasern kommen vor allem Fasermischungen aus Polyurethan und Polyamid in Betracht, so z.B. Trikotmaterial aus Polyamid/Polyurethan im Mischungsverhältnis 70:30. Ebenso kommen Fasermischungen aus Polypropylen und Polyamid in Frage. Grundsätzlich kann das reine oder gemischte Polyamidfasermaterial in verschiedenen Verarbeitungsformen vorliegen, wie z.B. als Faser, Garn, Gewebe, Gewirke oder Teppiche.

Als Polyesterfasermaterial, das erfindungsgemäss behandelt werden kann, sind z.B. Celluloseesterfasern, wie z.B. Cellulose-2½-acetatfasern und -triacetatfasern und besonders lineare Polyesterfasern, die eventuell auch sauer modifiziert sind, zu verstehen, die z.B. durch Kondensation von Terephthalsäure mit Ethylenglykol oder von Isophthalsäure oder Terephthalsäure mit 1 ,4-Bis(hydroxymethyl)-cyclohexan erhalten werden, sowie Fasern aus Mischpolymeren von Terephthal- und Isophthalsäure und Ethylenglykol. Das in der Industrie bisher fast ausschliesslich eingesetzte lineare Polyesterfasermaterial besteht aus Terephthalsäure und Ethylenglykol.

Die Fasermaterialien können auch als Mischgewebe unter sich oder mit anderen Fasern, z.B. Mischungen aus Polyacrylnitril/Polyester, Polyamid/Polyester, Polyester/Baumwolle, Polyester/Viskose und Polyester/Wolle, verwendet werden und nach bekannten Verfahren diskontinuierlich oder kontinuierlich gefärbt oder auch bedruckt werden.

Gewebe aus Baumwolle oder regenerierter Cellulose oder Mischgewebe aus Baumwolle oder Polyester und aus Baumwolle und Polyamid eignen sich besonders gut dazu, erfindungsgemäss behandelt zu werden, wobei Baumwollgewebe und -gewirke im Vordergrund des Interesses stehen. Mit z.B. Tensiden vorgewaschene Materialien kommen auch in Betracht. Es ist auch möglich, geschlichtete Baumwollfasern zu bleichen, wobei das Bleichen vor oder vorzugsweise nach dem Entschlichten erfolgt.

Die erfindungsgemässe Bleichmittelzusammensetzung kann auch zum Nachbleichen von oxidativen (Peroxid)bleichen verwendet werden. Bekanntermassen werden mit oxidativen Peroxidbleichverfahren hohe Weissgrade erzielt, jedoch sind die Bleicheffekte ohne reduktive Nachbehandlung relativ instabil, insbesondere beim Bleichen von tierischen Fasermaterialien. Abhängig vom einwirkenden Medium kann z.B. gebleichte Wolle innerhalb kurzer Zeit erheblich vergilben. Zur Erzielung eines stabilen Grundweiss ist daher eine anschliessende reduktive Bleiche unumgänglich. Zudem bringt eine solche Nachbleiche neben der Stabilisierung eine erhebliche Steigerung des Grundweiss.

Die unter Verwendung der erfindungsgemässen Zusammensetzung behandelten Fasermaterialien zeichnen sich durch ihren hohen Weissgrad aus. Ein weiterer Vorteil der erfindungsgemässen Bleichmittelzusammensetzung ist darin zu sehen, dass die umweltgerecht ist und die ökologischen Auflagen erfüllen kann.

Weiterhin kann die erfindgungsgemässe Zusammensetzung zum Bleichen von Papier verwendet werdem. Ein weiterer Erfindungsgegenstand ist daher ein Verfahren zum Bleichen von Papier. Das Verfahren ist dadurch gekennzeichnet, dass man die zum Bleichen vorbereitete Papiermasse mit einer wässrigen Flotte behandelt, welche mindestens die erfindungsgemässe Bleichmittelzusammensetzung enthält. Insbesondere eignet sich das erfindungsgemässe Verfahren zum Bleichen von Altpapier.

Das Verfahren wird gewöhnlich so durchgeführt, dass man Altpapier in einer Stoffaufbereitungsanlage, wie z.B. einer Altpapieraufbereitungsanlage von Sulzer Papertec, die gewöhnlich aus einem Stoffauflöser besteht, zunächst einer Dickstoffreinigung unterzieht. Sodann erfolgt eine Loch- und Schlitzsortierung, eine Reinigung von Schwer- und Leichtteilen und eine erste Wäsche. Anschliessend wird das so aufbereitete Papier dispergiert. In diesem Stadium wird der Stoff homogenisiert. An den Papierfasern noch anhaftende Druckfarben werden abgelöst. Gleichzeitig erfolgt der Bleichprozess, wobei die erfindungsgemässe Bleichmittelzusammensetzung dem aufgeschlagenen Papier in Mengen von 0,1 bis 10, vorzugsweise 0,3 bis 1,0 Gew.%, bezogen auf die zu bleichende Papiermasse, beigemischt wird.

Ein wesentlicher Vorteil des erfindungsgemässen Bleichverfahrens von Papier, insbesondere Altpapier, besteht darin, dass der gesamte Altpapieraufbereitungsprozess in neutralem pH-Bereich ohne pH-Sprung durchgeführt werden kann. Ein in dem zu behandelnden Papier gegebenenfalls vorhandener optischer Aufheller wird durch das erfindungsgemässe Bleichmittel nicht zerstört.

In den folgenden Beispielen beziehen sich Prozent und Teile stets auf das Gewicht.

### Beispiel 1: Herstellung der erfindungsgemässen Bleichmittelzusammensetzung

- 600 g: Natriumdithionit und
- 400 g: Trinatriumcitrat-Dihydrat

werden miteinander vermengt und 4 Stunden in einer Kugelmühle gemahlen. Es resultiert ein feinkörniges, gut schüttbares Pulver.

### Beispiel 2: Einstufige Bleiche

Rohes Woll-Trikot wird bei ständiger Flottenzirkulation, z.B. in einem Ahiba®-Färbeapparat, mit einer Bleichflotte folgender Zusammensetzung während 2 Stunden bei 50°C behandelt:
- 5 g/l: der Bleichmittelzusammensetzung von Beispiel 1 und
- 0,5 g/l: eines Netzmittels auf Basis von Polyacrylsäure und einem nichtionogenen Tensid

Das Wolltrikot wird nach der Behandlunggut ausgewaschen. Das gebleichte Wolltrikot hat einen guten Weissgrad.

### Beispiel 3: Kombinationsbleiche

In der ersten Stufe (Oxidationsbleiche) wird rohes Baumwolltrikot unter Bewegung in einer Maschine, z.B. in einem ® Ahiba-Färbeapparat, mit einer Bleichlösung folgender Zusammensetzung 30 Minuten bei 95°C behandelt:
6 ml/l Wasserstoffperoxid 35%,
0,5 g/l eines Netzmittels auf Basis von Polyacrylsäure und einem nichtionogenen Tensid,
0,5 g/l eines Bleichstabilisators auf Basis eines Magnesiumsalzes und
3 g/l NaOH 100%.

Das Flottenverhältnis beträgt 1:20. Nach Beendigung wird das gebleichte Trikot gut ausgespült.

Die Bleichlösung der 2. Stufe (reduktive Bleiche) enthält folgende Komponenten:
5 g/l der Bleichmittelzusammensetzung von Beispiel 1,
0,5 g/l eines Netzmittels auf Basis von Polyacrylsäure und einem nichtionogenem Tensid.

Die Behandlung erfolgt gemäss Beispiel 2 während einer Behandlungszeit von 30 Minuten und einer Temperatur von 60°C. Das Baumwolltrikot wird am Ende gut ausgewaschen. Es zeichnet sich durch einen hohen Weissgrad aus.

### Beispiel 4: Kombinationsbleiche

Leinengewebe wird in der 1. Stufe (Oxidationsbleiche) unter Bewegung mit einer Lösung folgender Zusammensetzung bei Raumtemperatur während einer Stunde behandelt:
3 g/l Natriumhypochlorit und
1 g/l eines Netzmittels auf Basis von Polyacrylsäure und einem nichtionogenem Tensid.

Das behandelte Gewebe wird anschliessend gut ausgewaschen.

Die Bleichlösung der 2. Stufe (reduktive Bleiche) hat folgende Zusammensetzung:
5 g/l der Bleichmittelzusammensetzung von Beispiel 1 und
0,5 g/l eines Netzmittels auf Basis von Polyacrylsäure und einem nichtionogenen Tensid. Die Behandlung erfolgt entsprechend Beispiel 2. Die Behandlungszeit beträgt 2 Stunden, die Temperatur 50°C.
Abschliessend wird das fertig gebleichte Leinengewebe gut ausgespült. Es wird ein hoher Weissgrad erzielt.

### Beispiel 5:

In einem Laborexperiment wird
- 15 g: trockene Altpapiermasse, die für den Bleichprozess vorbereitet ist, in
- 100 ml: Wasser (15% Feststoffverhältnis) mit
- 0,006 g: einer Zusammensetzung bestehend aus
60% Natriumdithionit und
40% Trinatriumcitrat-Dihydrat

jeweils 7 Minuten und 20 Minuten in einem Bleichverweilverfahren bei einer Temperatur von 80°C behandelt.

Es werden folgende Weissgrade erzielt (nach Tappi):

| | |
|---|---|
| Nach einer Behandlungszeit von 7 Minuten: | 76,8 |
| Nach einer Behandlungszeit von 20 Minuten: | 78,4 |

## Patentansprüche

1. Phosphatfreie, reduktive Bleichmittelzusammensetzung, enthaltend
(a) ein reduktives Bleichmittel und
(b) einen Bleichstabilisator ausgewählt aus
(b₁) einem Zitronensäurederivat,
(b₂) einem Homo- oder Copolymerisat von ethylenisch ungesättigten Mono- oder Dicarbonsäuren,
(b₃) einem wasserlöslichen Magnesiumsalz und
(b₄) einem Alkalimetallsalz der Tetraborsäure.

2. Bleichmittelzusammensetzung nach Anspruch 1, dadurch gekennzeichnet, dass sie als Komponente (a) das Salz einer dithionigen Säure enthält.

3. Bleichmittelzusammensetzung nach Anspruch 1 oder 2, dadurch gekennzeichnet, dass sie als Komponente (a) Natriumdithionit enthält.

4. Bleichmittelzusammensetzung nach einem der Ansprüche 1 bis 3, dadurch gekennzeichnet, dass sie als Komponente (b₁) ein wasserlösliches Alkalisalz der Zitronensäure enthält.

5. Bleichmittelzusammensetzung nach Anspruch 4, dadurch gekennzeichnet, dass sie als Komponente (b₁) Trinatriumcitrat-Dihydrat enthält.

6. Bleichmittelzusammensetzung nach einem der Ansprüche 1 bis 3, dadurch gekennzeichnet, dass sie als Komponente (b₂) Polymethacrylsäure enthält.

7. Bleichmittelzusammensetzung nach einem der Ansprüche 1 bis 3, dadurch gekennzeichnet, dass sie als Komponente (b₂) ein Copolymerisat aus Acrylsäure und Maleinsäure enthält.

8. Bleichmittelzusammensetzung nach einem der Ansprüche 1 bis 3, 6 oder 7, dadurch gekennzeichnet, dass die Komponente (b₂) ein Molekulargewicht von 2'000 bis 2'000'000 aufweist.

9. Bleichmittelzusammensetzung nach einem der Ansprüche 1 bis 3, 6, 7 oder 8, dadurch gekennzeichnet, dass die Komponente (b₂) als Gemisch mit einem wasserlöslichen Alkalisalz verwendet wird.

10. Bleichmittelzusammensetzung nach Anspruch 9, dadurch gekennzeichnet, dass als wasserlösliches Alkalisalz Natriumcarbonat verwendet wird.

11. Bleichmittelzusammensetzung nach einem der Ansprüche 1 bis 3, dadurch gekennzeichnet dass sie als Komponente (b₃) das Magnesiumsalz der Gluconsäure enthält.

12. Bleichmittelzusammensetzung nach einem der Ansprüche 1 bis 3, dadurch gekennzeichnet, dass als Komponente (b4) Natriumtetraborat verwendet wird.

13. Bleichmittelzusammensetzung nach einem der Ansprüche 1 bis 3, enthaltend
(a) Natriumdithionit und
(b) Trinatriumcitrat-Dihydrat.

14. Bleichmittelzusammensetzung nach einem der Ansprüche 1 bis 3, enthaltend
(a) Natriumdithionit und
(b) das Copolymerisat aus Acrylsäure und Maleinsäure.

15. Bleichmittelzusammensetzung nach einem der Ansprüche 1 bis 14, dadurch gekennzeichnet, dass es die Komponenten (a) und (b) im Verhältnis 10:1 bis 1:2 enthält.

16. Bleichmittelzusammensetzung nach einem der Ansprüche 1 bis 15, dadurch gekennzeichnet, dass es zusätzlich als Komponente (c) ein Netzmittel enthält.

17. Bleichmittelzusammensetzung nach einem der Ansprüche 1 bis 16, dadurch gekennzeichnet, dass es zusätzlich als Komponente (d) einen optischen Aufheller enthält.

18. Bleichmittelzusammensetzung nach einem der Ansprüche 1 bis 17, enthaltend
30 bis 80 Gew.% der Komponente (a),
20 bis 70 Gew.% der Komponente (b),
0 bis 10 Gew.% der Komponente (c) und
0 bis 10 Gew.% der Komponente (d)

19. Verfahren zum Bleichen von Papier, dadurch gekennzeichnet, dass man das für den Bleichprozess vorbereitete Papier mit einer wässrigen Flotte behandelt, welche mindestens die erfindungsgemässe Bleichmittelzusammensetzung nach Anspruch 1 enthält.

20. Das nach Anspruch 19 behandelte Papier.

21. Verfahren zum reduktiven Bleichen von natürlichen oder synthetischen Fasermaterialien, dadurch gekennzeichnet, dass man das Fasermaterial mit einer wässrigen Flotte behandelt, welche mindestens die erfindungsgemässe Bleichmittelzusammensetzung nach Anspruch 1 enthält.

22. Das mit dem Verfahren nach Anspruch 21 behandelte Fasermaterial.
